# EUROPEAN PATENT SPECIFICATION

(11) **EP 2 352 077 B1**
(45) Date of publication and mention of the grant of the patent: **10.02.2016**
(21) Application number: 09823647.4
(22) Date of filing: 22.10.2009
(51) Int. Cl.: G06F 3/0481, G06F 3/041, G06F 3/0488

(54) **PORTABLE TERMINAL DEVICE, DATA MANIPULATION PROCESSING METHOD AND DATA MANIPULATION PROCESSING PROGRAM**
TRAGBARES ENDGERÄT, DATENMANIPULATIONSVERARBEITUNGSVERFAHREN UND DATENMANIPULATIONSVERARBEITUNGSPROGRAMM
DISPOSITIF DE TERMINAL PORTABLE, PROCÉDÉ ET PROGRAMME DE TRAITEMENT POUR MANIPULATION DE DONNÉES

(30) Priority: 30.10.2008 JP 2008279174
(43) Date of publication of application: 03.08.2011
(73) Proprietor: NEC Corporation, Minato-ku Tokyo 108-8001 (JP)
(72) Inventor: UCHIDA, Kaoru, Tokyo 108-8001 (JP)
(74) Representative: Betten & Resch
(86) International application number: PCT/JP2009/068541
(87) International publication number: WO 2010/050537

(56) References cited:
- EP-A1- 1 942 401
- WO-A2-2006/020305
- JP-A- 2004 133 518
- JP-A- 2007 293 820
- US-A- 5 856 822
- US-A1- 2008 036 743

## Description

### TECHNICAL FIELD

The invention relates to a portable terminal device, a data manipulation processing method, and a data manipulation processing program. The invention relates, in particular, to a portable terminal device, a data manipulation processing method, and a data manipulation processing program, which achieve data manipulation using a touch panel.

### BACKGROUND ART

A personal portable terminal device having a touch panel, like a portable phone, enables simple and intuitive manipulation by directly manipulating data or contents displayed on the touch panel by using a manipulating tool, like a pen-shaped member or a finger.

Japanese Patent Application Laid-Open No. 2007-293820, for example, discloses a terminal device which performs predetermined functions in response to touch manipulations, like the number of touches to the touch panel and following moving of a touch point, and the like. In the terminal device described in JP-A-2007-293820, it is enabled to delete a text between a initial position of two fingers and a final position thereof by touching the text with the two fingers and dragging the two fingers to a predetermined position (i.e. moving to a predetermined position) while touching. In the terminal device described in the gazette, it is possible to perform page turning of the number of pages corresponding to the touch number of touches to the touch panel.

EP 1 942 401 A1 relates to a system, method, and software for implementing gestures with touch sensitive devices for managing and editing media files on a computing device or system. Specifically, gestural inputs of a human hand over a touch/proximity sensitive device can be used to control, edit, and manipulate files, such as media files including without limitation graphical files, photo files and video files. In particular, a method for scrolling the display of a media file on a handheld mobile communication device having a touch sensitive display screen is provided. The method comprising the steps of causing the display screen to display a section of the media file, detecting a touch scroll input at the surface of the display screen, the touch scroll input including a human finger touchdown point on the surface of the display screen, the touchdown point corresponding to a location on the display screen at which the section of the media file Is displayed, detecting a drag movement of the human finger touchdown point on the display screen, the drag movement spanning across a portion of the section of the media file being displayed and Including a vertical and a horizontal vector component, determining the drag movement of the finger touchdown point to indicate a scroll action, and causing the media file to scroll on the display screen, wherein the scroll is restricted to one of a vertical and a horizontal direction.

### DISCLOSURE OF THE INVENTION

### [PROBLEM TO BE SOLVED]

The terminal device described in Japanese Patent Application Laid-Open No. 2007-293820 above-mentioned, only executes a predetermined functions corresponding to the number of touches and the following touch operation. Therefore, even if "the number of touches and the following touch operation" is determined, in the terminal device, it cannot be indentified which hierarchy's data a manipulation instruction by the touch operation directs to, when data with a hierarchical data structure is displayed. Thus, there is a problem that a predetermined function cannot be performed on the basis of the manipulation.

Specific descriptions are as follows. An example of the data with a hierarchical data structure is a data in which a book (the highest-ranking data group) includes a plurality of pages (high-ranking data group), and a plurality of data items (low-ranking individual data) are included in the page. Suppose, for example, that the terminal device, "which executes a predetermined function corresponding to the number of touches and the following touch operation", displays a page including a plurality of data items.

Further, suppose that a finger touches the displayed page and moves from left to right thereon. In this example, on the above manipulation, the terminal device cannot distinguish a manipulation instruction in which an individual data item, being located on the left side of the page and touched by the finger, is moved to the right side thereof, from a manipulation instruction in which the displayed page is turned to display the next page regardless of the data item. The terminal device, therefore, cannot execute a predetermined function.

The terminal device described in Japanese Patent Application Laid-Open No. 2007-293820 cannot identify which hierarchy's data the manipulation instruction by a touch operation performed on a touch panel directs to, if the displayed data includes the hierarchical structure. Therefore, the terminal device includes the problem in which predetermined functions cannot be executed if the displayed data includes the hierarchical structure.

The purpose of the invention is to provide a portable terminal device, a data manipulation processing method, and a data manipulation processing program, that can identify which hierarchy's data the manipulation instruction by a touch operation performed on a touch panel directs to, and can execute predetermined functions, even when data with a hierarchical data structure is displayed.

### [MEANS FOR SOLVING THE PROBLEM]

The present invention is defined in the independent claims. The dependent claims define embodiments of the present invention.

The portable terminal device, having a touch panel in a display screen thereof, includes a press operation detecting unit for detecting a press operation for a predetermined region in the display screen, a sweep operation detecting unit for detecting a sweep operation for another region in the display screen, a terminal data processing unit for identifying hierarchy of data to be manipulated, on the basis of the presence or absence of the press operation detected by the press operation detecting unit, and for executing processing for data of the identified hierarchy, on the basis of contents of the sweep operation detected by the sweep operation detecting unit.

The data manipulation processing method is a data manipulation processing method for the portable terminal device having a touch panel in a display screen thereon. The method includes detecting a press operation for a predetermined region in the display screen and a sweep operation for another region in the display screen, identifying a hierarchy of data to be manipulated on the basis of presence or absence of the press operation, and executing a process for the data of the identified hierarchy on the basis of contents of the sweep operation.

The data manipulation processing program is a data manipulation processing program which causes a computer device having a touch panel in a display screen thereon to execute. The program causes the computer device to executes a process for detecting a press operation for a predetermined region in a display screen and a sweep operation for another region in the display screen, and a process for identifying a hierarchy of data to be manipulated on the basis of the presence or absence of the press operation, and executing a process for the data of the identified hierarchy on the basis of contents of the sweep operation.

### [EFFECT OF THE INVENTION]

According to the invention, it can be identified which hierarchy's data the manipulation instruction by a touch operation performed on a touch panel directs to, even when data with a hierarchical data structure is displayed, and thereby a predetermined function can be executed.

### BRIEF DESCRIPTION OF THE DRAWINGS

Fig. 1 is a block diagram illustrating a first embodiment of a portable terminal device of the present invention.
Fig. 2 is a block diagram illustrating a second embodiment of a portable terminal device of the present invention.
Fig. 3 is a diagram showing an example of a structure of data displayed on a portable terminal device of the present invention.
Fig. 4 is a flowchart showing operations in a portable terminal device of the present invention.
Fig. 5 is a diagram showing examples on a display and a manipulation in a touch panel of a portable terminal device of the present invention.
Fig. 6 is a diagram showing an example of a structure of data displayed in a portable terminal device of the present invention.
Fig. 7 is a diagram showing examples on a display and a manipulation in a touch panel of a portable terminal device of the present invention.
Fig. 8 is a block diagram illustrating an example of a hardware configuration of a portable terminal device of the present invention.

### [REFERENCE NUMERALS]

- 1: PORTABLE TERMINAL DEVICE
- 2: DISPLAY SCREEN
- 3: PRESS OPERATION DETECTING UNIT
- 4: SWEEP OPERATION DETECTING UNIT
- 5: TERMINAL DATA PROCESSING UNIT
- 10: PORTABLE TERMINAL DEVICE
- 20: TOUCH PANEL UNIT
- 21: TOUCH DETECTING UNIT
- 22: PANEL DISPLAY UNIT
- 30: USER INTERFACE UNIT
- 31: MULTI TOUCH DETECTING UNIT
- 32: BINDING REGION PUSHING DETECTING UNIT
- 33: DATA REGION TOUCH MANIPULATION DETECTING UNIT
- 34: DISPLAY DATA MANAGING UNIT
- 40: TERMINAL DATA PROCESSING UNIT
- 41: HIGH-RANKING DATA PROCESSING UNIT
- 42: INDIVIDUAL DATA PROCESSING UNIT
- 50: TERMINAL DATA STORING UNIT

### BEST MODE FOR CARRING OUT THE INVENTION

Next, embodiments of the present inventions are described in detail in reference to drawings.

### (First embodiment)

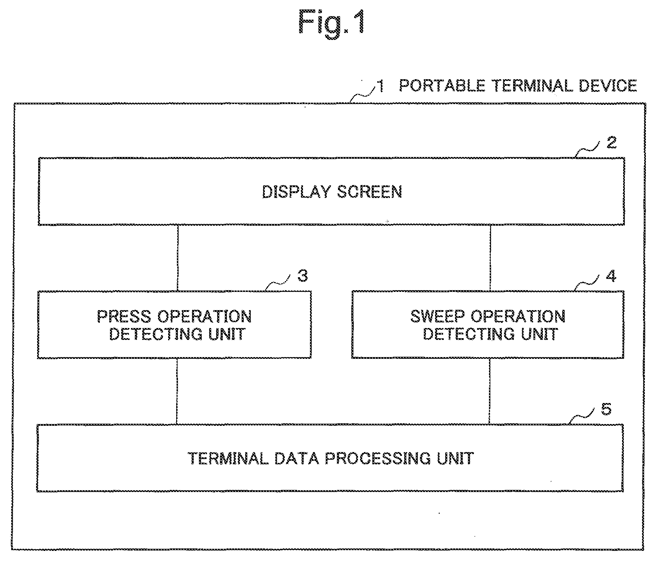

Fig. 1 is a block diagram illustrating a first embodiment of a portable terminal device of the present invention.

Referring to Fig. 1, a portable terminal device 1 of the embodiment includes a display screen 2, a press operation detecting unit 3, a sweep operation detecting unit 4, and a terminal data processing unit 5.

The display screen 2 includes a touch panel, on which data with a hierarchical structure is displayed. A touch panel detects a touch, e.g. a press or the like, by fingers or the like, on the display screen 2. The data with the hierarchical structure is, for example, a data including a book (the highest-ranking data (data object) group) with a plurality of pages (high-ranking data (data object) group), and a page which includes a plurality of data items (low-ranking individual data (data object)).

The press operation detecting unit 3 detects a press operation for a predetermined region in the display screen 2. The predetermined region in the display screen 2 is a longitudinal belt-shaped region which is located on the left side of the display screen 2 (binding region).

The sweep operation detecting unit 4 detects a sweep operation on another region in the display screen 2 (region other than the predetermined region above). The sweep operation means moving of touch (press position) on the display screen 2, i.e. moving from a start point (touch start point) to an end point (touch end point).

The terminal data processing unit 5 identifies hierarchy of data to be manipulated on the basis of presence or absence of the press operation detected by the press operation detecting unit 3, and executes processing for data of the identified hierarchy on the basis of contents of the sweep operation detected by the sweep operation detecting unit 4. That is, the terminal data processing unit 5 executes processing for a low-ranking hierarchy data object on the basis of the contents of the sweep operation when the absence of the press operation is detected by the press operation detecting unit 3, and processing corresponding to the contents of the sweep operation for a high-ranking hierarchy data object when the presence of the press operation is detected by the press operation detecting unit 3.

More specifically, the terminal data processing unit 5 executes processing of displaying a following page or a preceding page, when the high-ranking hierarchy data object displayed on the display screen 2 is a page including individual data as the low-ranking hierarchy data object, if the press operation detecting unit 3 detects presence of the press operation, and if the sweep operation detecting unit 4 detects a sweep operation of sweeping the page from left to right or from right to left. The terminal data processing unit 5 deletes a page currently displayed, when the high-ranking hierarchy data object displayed on the display screen 2 is the page including the individual data as the low-ranking hierarchy data object, if the press operation detecting unit 3 detects presence of the press operation, and if the sweep operation detecting unit 4 detects a sweep operation of sweeping the page from top to bottom.

When the press operation detecting unit 3 detects absence of the press operation, the terminal data processing unit 5 determines that individual data, which is included in the page and is located at a hierarchy being lower than the page, is an object to be manipulated. The terminal data processing unit 5 moves the individual data to the end point of the sweep operation, if the sweep operation detecting unit 4 detects the sweep operation of sweeping the individual data included in the page.

When the press operation detecting unit 3 detects absence of the press operation, and when the sweep operation detecting unit 4 detects the sweep operation of sweeping the individual data included in the page to a data object indicating deletion of the individual data, the terminal data processing unit 5 deletes the individual data.

According to the first embodiment of the portable terminal device of the present invention, when the page including the low-ranking individual data with the hierarchical data structure is displayed on the display screen (touch panel), it is possible to turn the page and display a following page or a preceding page, if a finger sweeps from left to right or from right to left while pressing the binding region. If the finger sweeps from left to right or from right to left without pressing the binding region, it is possible to move the individual data located at the start point of the sweep operation to the right or to the left. According to the present invention, even when a data with the hierarchical data structure is displayed, it cannot be identified which hierarchy's data the manipulation instruction by a touch operation performed on a touch panel directs to, and a predetermined function can be executed. Thus, the simple and intuitive manipulation instruction for users becomes possible.

It is possible to properly input a direct instruction to every hierarchy of data and to control display processing in response to the inputted instruction, while keeping intuitive simplicity.

### (Second embodiment)

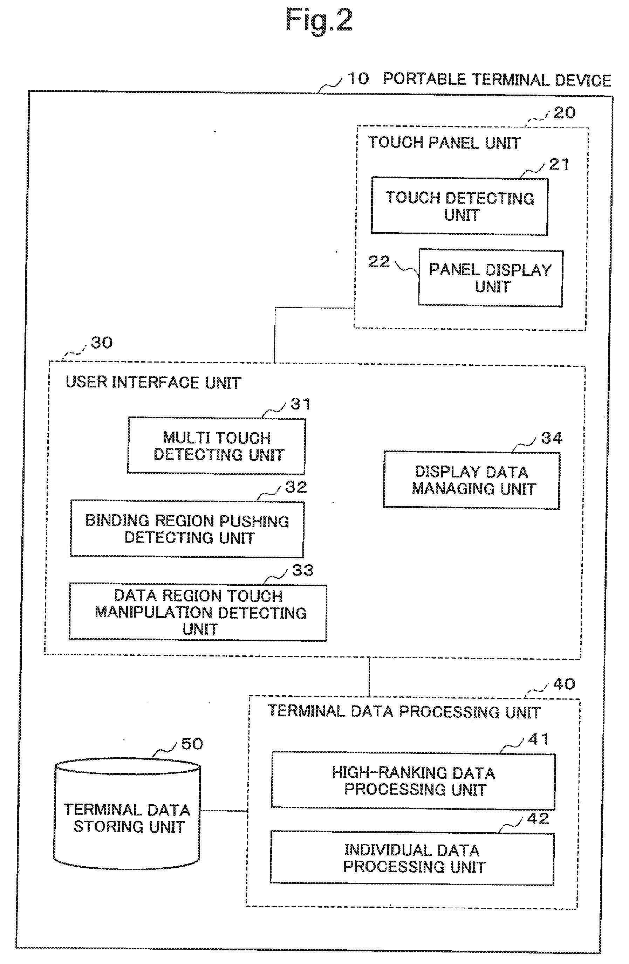

Fig. 2 is a block diagram illustrating a second embodiment of a portable terminal device of the present invention.

Referring to Fig. 2, a portable terminal device 10 of the embodiment, like a portable phone, includes a touch panel unit 20, a user interface unit 30, a terminal data processing unit 40, and terminal data storing unit 50. The portable terminal device 10 includes elements which a standard portable phone terminal includes, e.g. a communication unit for conducting wireless communication, a key operation unit with hardware keys, in addition to the above units. Descriptions on the elements are, however, omitted.

The touch panel unit 20 is a touch panel, which enables multi-touch, can indentify and detect simultaneous pressing a plurality of regions on a screen. The touch panel unit 20 includes a touch detecting unit 21 and a panel display unit 22.

The touch detecting unit 21 of the touch panel unit 20 detects a touch on the screen of the panel display unit 22. The touch on the screen is performed by an operating member, e.g. a pen-shaped member, a finger, or the like (hereinafter referred to as "finger" on behalf of the operating members). Whenever the touch detecting unit 21 detects a touch on the screen, the touch detecting unit 21 detects timing of pressing the screen (timing of touch start), timing of touch end, i.e. timing of when the pressing finger moves away from the screen, and positional coordinates (touch coordinates) of a press position (touch position) on the touch panel display unit 22.

The user interface unit 30 includes a multi-touch detecting unit 31, a binding region press detecting unit 32, a data region touch operation detecting unit 33, and a display data managing unit 34.

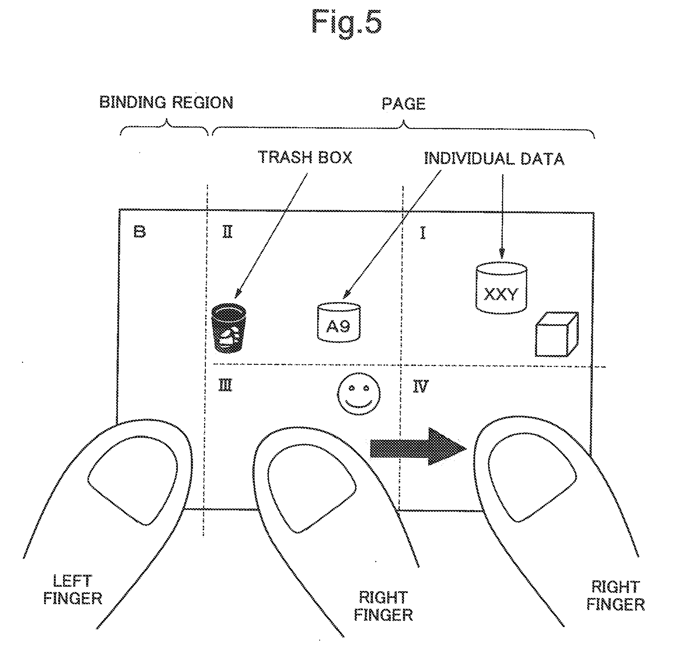

In particular, the multi-touch detecting unit 31 determines whether or not two positions are simultaneously touched, when a touch on the touch panel unit 20 is detected. When two positions are simultaneously touched, the binding region press detecting unit 32 determines whether or not one of the positions is in a binding region. The binding region indicates a book binding part arranged at the left side of the screen on which a page is displayed in a note pad form as shown in Fig. 5. The display data managing unit 34 controls a display on the touch panel display unit 22 of the touch panel unit 20.

The data region touch operation detecting unit 33 detects moving of touch by the finger within the data region (sweep operation), that is, moving of the press position, and detects the start point (touch start point) and the end point (touch end point). The data region touch operation detecting unit 33 detects where the sweep operation starts on the data region and where the sweep operation ends thereon. The data region indicates a plurality of data regions I, II, III, IV on the page where a plurality of individual data are displayed. The terminal data processing unit 40 includes a high-ranking data processing unit 41 and an individual data processing unit 42.

The terminal data processing unit 40 executes processing at a page level regarding a page which is high-ranking data, and executes processing at an individual data level regarding individual data which is included in the page, in response to an instruction from the touch panel 20, and the like. Further, the terminal data processing unit 40 displays results of the execution on the panel display unit 22 through the display data managing unit 34, as necessary. In particular, the high-ranking data processing unit 41 executes the processing at the page level and the individual data processing unit 42 executes the processing at the individual data level.

### (Operation of the second embodiment)

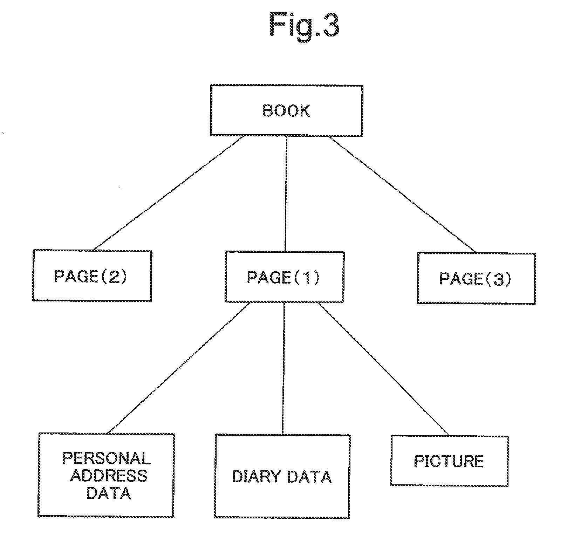

An example of an operation of the second embodiment of the portable terminal device of the present invention is described, in reference to Fig. 3, Fig. 4, and Fig. 5.

Fig. 3 is a diagram showing an example of a structure of data displayed on the portable terminal device of the present invention. As shown in Fig. 3, data displayed on the panel display unit 22 includes a hierarchical structure having three levels, that is, the highest-ranking level (book), a high-ranking level (page), and a low-ranking level (individual data). The book, i.e. a data group at the highest-ranking level, is composed of a plurality of pages, i.e. data objects at the high-ranking level. The pages include a plurality of individual data, i.e. data objects at the low-ranking level. Fig.3 shows that a page (1) includes individual address data, diary data, and picture data, that is, the individual data, and both of pages (2) and (3) are empty.

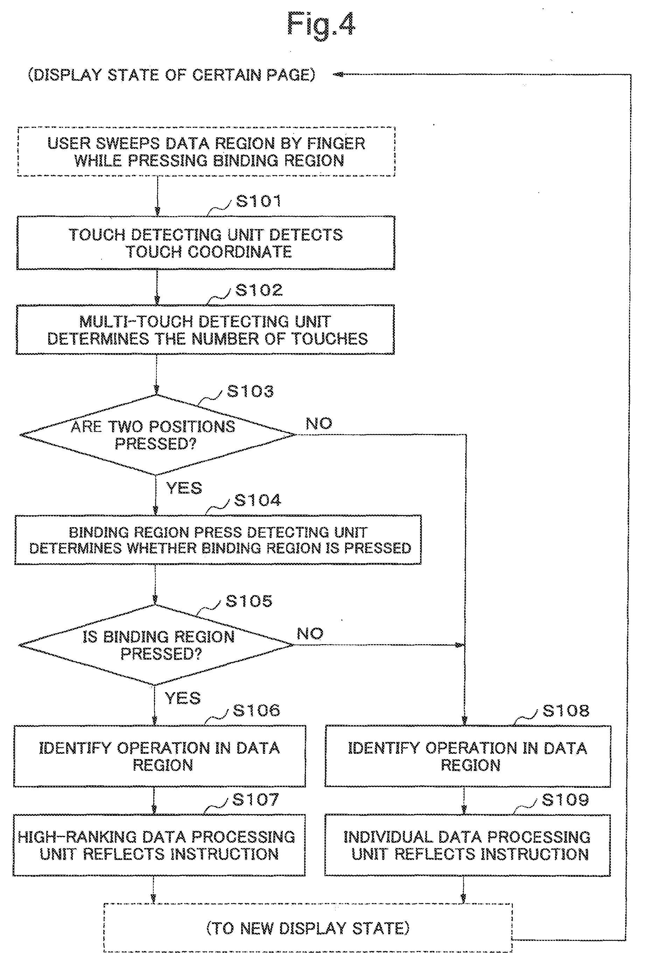

Fig. 4 is a flowchart showing operations in the portable terminal device of the present invention.

Fig. 5 is a diagram showing examples on a display and a manipulation in the touch panel of the portable terminal device of the present invention. Fig. 5 shows an example of the page displayed in a note pad form. The binding region is located on the left side of the screen, a plurality of data regions I, II, III, IV on the page displays a plurality of individual data. Fig. 5 shows an operation in which a user sweeps a data region on the page from left to right by using a right finger, while pressing the binding region B using a left finger.

In Fig. 4, initially, a page is displayed on the panel display unit 22, as shown in Fig. 5. Suppose that a user sweeps a data region on the page from left to right by using a right finger, while pressing the binding region B using a left finger.

Next, in a step S101, the touch detecting unit 21 detects position coordinates (touch coordinates) of a finger (e.g. two fingers) touching the touch panel unit 20, and moving information thereon (information on trajectory of the position coordinates of the finger moving with touching). The touch detecting unit 21 sends the position coordinates and moving information, as detected information, to the multi-touch detecting unit 31 in the user interface unit 30.

In a step S102, the multi-touch detecting unit 31 detects the number of touches on the touch panel unit 20 on the basis of the detected information from the touch detecting unit 21.

In a step S103, the multi-touch detecting unit 31 determines whether or not two positions are touched at the same time on the basis of the result of detection in the step S102. Then, if two positions are touched at the same time, a step S 104 is executed. If two positions are not touched at the same time, a step S108 is executed.

In the step S104, the binding region press detecting unit 32 determines whether or not one position on the binding region B is pressed.

In a step S105, if it is determined that one position on the binding region B is pressed, in the step S104, a step S106 is executed. If it is determined that one position on the binding region B is not pressed, in the step S104, a step S108 is executed.

In the step S106, in this case, because two positions are touched and touching one position is executed within the binding region B, it means that another action is executed by touching the data region of the page, while pressing the binding region B. In this case, the data region touch operation detecting unit 33 detects a touch operation in the data region.

In a step S107, the high-ranking data processing unit 41 recognizes the touch operation and executes a predetermined operation on the basis of the result of detection of the touch operation in the data region by the data region touch operation detecting unit 33. As the predetermined operation executed by the high-ranking data processing unit 41, following operations (A) to (E) are exemplified.
(A) An operation in case that touch moving from the data region IV to the data region III on the page (e.g. moving using right finger: sweep) is executed, while pressing the binding region B (e.g. using left finger): : A page turning operation to a forward direction is executed. That is, a next page of a currently displayed page is displayed.
(B) An operation in case that touch moving (sweep) from the data region III to the data region IV on the page is executed while pressing the binding region B : : A page turning operation to a backward direction is executed. That is, a previous page of the currently displayed page is displayed.
(C) An operation in case that touch moving (sweep) from the data region II to the data region IV on the page is executed while pressing the binding region B : : A page discarding operation is executed. That is, a discard flag is given to page data including the individual data included in the current page, and the page data is sent to a "trash box" data region. The "trash box" data region is a "trash box" region of the data region II in Fig. 5.
(D) An operation in case that touch moving (sweep) from the data region I to the data region IV on the page is executed while pressing the binding region B : : An operation for displaying a submenu for page moving and page copying is executed. That is, an action list, as the sub menu, is overlaid and displayed on the page so that further detailed command on the page is selected and executed.
(E) An operation in case that touch moving (sweep) on the page is executed in the following order, the data region II, the data region I, and the data region IV, while pressing the binding region B : : An operation is executed, by which a list of descriptions about a page processing operation as a help screen is overlaid and displayed on the page.

In case of NO in the step S103 or the step S105, the following operation is executed in the step S108. That is, the data region touch operation detecting unit 33 detects a touch operation in the data region.

In a step S109, the individual data processing unit 42 takes the touch operation as a manipulation instruction for individual data displayed in the page, and executes a predetermined operation, on the basis of the detected result on the touch operation detected in the step S108. The predetermined operation executed by the individual data processing unit 42 includes, for example, following operations (A) and (B). After these operations, a new display state appears.
(A) An operation in case that a sweep by a finger (e.g. right finger) is executed without pressing the binding region B : : The individual data at a moving start point (touch start point) is moved to the end point (touch end point).
(B) An operation in case that the individual data is touched and a sweep to the trash box in the screen is executed without pressing the binding region B : : The discard flag is given to the touched individual data, and the individual data therewith is moved to the "trash box" data region.

After the operation by the high-ranking data processing unit 41 or by the individual data processing unit 42 is executed, the display data managing unit 34 makes display which reflects the operation result, on the panel display unit 22 in the touch panel unit 20, and waits for a next user instruction.

As mentioned above, according to the second embodiment of the present invention, when the touch panel displays the page including low-ranking level individual data with the hierarchical data structure, and when a sweep by a finger from left to right or from right to left is executed while pressing the binding region, it is possible to turn the page to display the next or previous page. It is possible to move individual data at the start point of the sweep operation to the right or to the left, when the sweep by a finger from left to right or from right to left is executed without pressing the binding region. According to the present invention, even when data with a hierarchical data structure is displayed, it can be indentified which hierarchy's data the manipulation instruction by a touch operation performed on the touch panel directed to, a predetermined function can be executed. Therefore, a simple and intuitive manipulation instruction for a user becomes possible.

It is possible to properly input a direct instruction to every hierarchy of data, and to control display processing corresponding to the inputted instruction, while keeping intuitive simplicity.

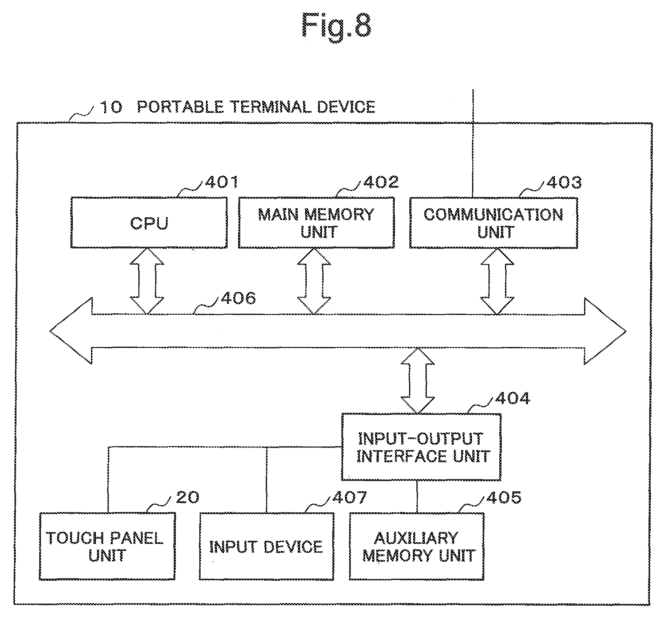

Fig. 8 is a block diagram illustrating an example of a hardware configuration of the portable terminal device of the present invention.

Referring to Fig. 8, the portable terminal device 10 can be composed of a hardware configuration similar to a general computer device, and composed of CPU (Central Processing Unit) 401, RAM (Random Access Memory) and the like. The portable terminal device 10 includes a main memory unit 402, a communication unit 403, an input-output interface unit 404, an auxiliary storage unit 405, a system bus 406, an input device 407, like a keyboard, and a touch panel unit 20. The main memory unit 402 is used for a work space of data or a temporary saving space of data. The communication unit 403 conducts transmission and reception for data. The input-output interface unit 404 conducts transmission and reception for data. The auxiliary storage unit 405 is composed of a ROM (Read Only Memory), a magnetic disc, a non-volatile memory, like a semiconductor memory or the like. The system bus 406 makes connections between above elements of the device.

The portable terminal device 10 of the embodiment of the present invention can mount a circuit component as a hardware component, e.g. a LSI (Large Scale Integration), or the like, which installs programs causing the above user interface unit 30 or the terminal data processing unit 40 to execute a data operation processing. Therefore, an operation of data operation processing by the above user interface unit 30 or the terminal data processing unit 40 is achieved by using hardware. It is possible to store programs providing each function of the user interface unit 30 and the terminal data processing unit 40 in the auxiliary storage unit 405, to load the programs into the main storage unit 402, and to make the programs cause to execute the functions. Therefore, it is possible to achieve the data operation processing by the user interface unit 30 or the terminal data processing unit 40 by using software.

### (Third embodiment)

The third embodiment on the portable terminal device of the present invention is described in reference to drawings.

The configuration of the third embodiment of the portable terminal device is the same as the configuration of the second embodiment of the portable terminal device shown in Fig. 2 except that some pages or individual data are grouped and managed.

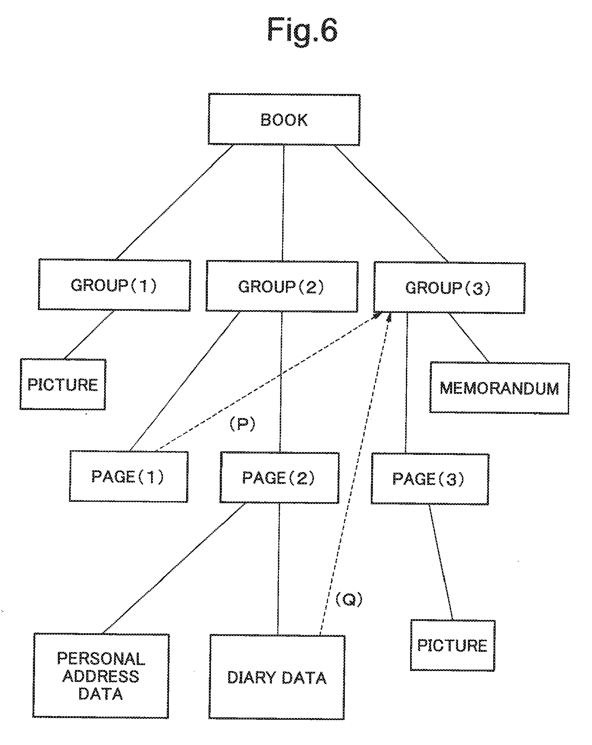

Fig. 6 is a diagram showing an example of a structure of data displayed in the portable terminal device of the present invention. Data to be displayed on the panel display unit 22 includes a hierarchical structure having three levels, that is, the highest-ranking level (book), a high-ranking level (page), and low-ranking level (individual data), like the data shown in Fig. 3. The data includes a structure which some pages or individual data are grouped and processed. In Fig. 6, the book, i.e. the highest-ranking data group includes a plurality of groups (1) ~ (3), and each of the groups includes a page, individual data, or both. The group (1) includes a picture, as the individual data, the group (2) includes a page (1) and a page (2), and further the page (2) includes personal address data and diary data as the individual data. The group (3) includes a page (3) and a memorandum, and the page (3) includes picture data.

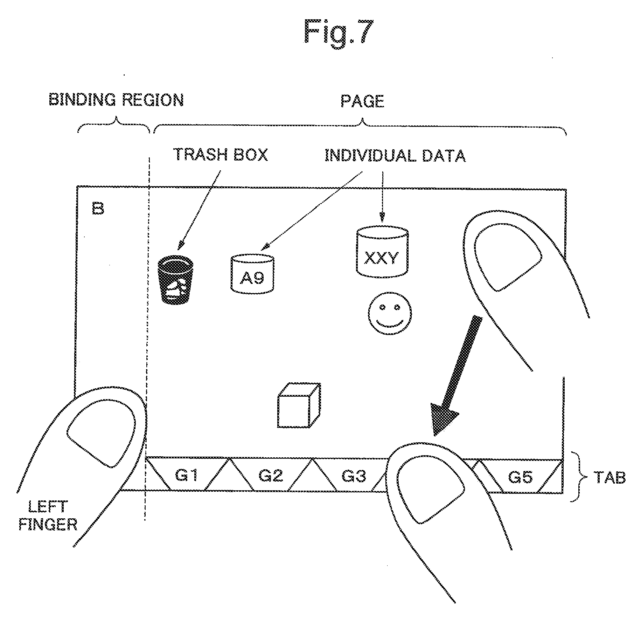

Fig. 7 is a diagram showing examples on a display and a manipulation in a touch panel of a portable terminal device of the present invention. Fig. 7 shows an example in which the page is displayed in a note pad form. The binding region B is located on the left side of the screen. The binding region B is used for an instruction of page manipulation, e.g. page moving, copy, and the like. In order to instruct a manipulation at a group level, for example, a plurality of tab regions G (tabs G1∼G5) each corresponding to the group are displayed at the bottom of the screen. In this case, a user sweeps the page from the data region to the tab 4 by using a right finger, while pressing the binding region B using a left finger.

An operation of the portable terminal device 10 is described, which is executed when a user sweeps the data region by using a right finger while pressing the binding region B by using a left finger. Like the case described in the first embodiment, this sweeping manipulation for the data region while pressing the binding region B is identified as an action instructing a manipulation for a page, and processing for the page is executed.

In the embodiment, following operations are added, in addition to the operation of the second embodiment.

Initially, as shown in Fig. 7, an operation of the portable terminal device 10 is added, which is executed when a user carries out the sweep by using a right finger while pressing the binding region B by using a left finger.

An example of the operation is an operation of the portable terminal device 10 which is executed when a start point of the sweep is located within the current page, and an end point of the sweep is located within the tab region at the bottom of the page. In this case, the data region touch operation detecting unit 33 detects the sweeping operation with the pressing of the binding region B. On the basis of the detection result, the high-ranking data processing unit 41 identifies that the start point of the sweep is located within the current page, and the end point of the sweep is located within the tab region at the bottom of the page. Further, the high-ranking data processing unit 41 identifies that the sweep manipulation is an instruction to transfer the current page to a group corresponding to the tab, at the end point of the sweep, (tab G4 in the example of Fig. 7). The high-ranking data processing unit 41 executes a process which the current page is transferred to the group corresponding to the tab G4.

As an example of the display shown in Fig. 7, when the currently displayed page is the page (1) shown in Fig. 6, and the tab G4 corresponds to the group (3), an operation which the page (1) is transferred from the group (2) to the group (3) is executed, as shown by an arrow P in Fig. 6.

Secondarily, an operation of the portable terminal device 10 is added, which is executed when a user performs a sweep manipulation by using a right finger, without pressing the binding region B.

An example of the operation is an operation which is executed when the start point of the sweep is located on individual data within the page, and the end point of the sweep is located within the tab region at the bottom of the page. In this case, the data region touch operation detecting unit 33 detects the manipulation, and on the basis of the detection result, the low-ranking data processing unit 42 identifies that the manipulation is an instruction of transferring the individual data at the start point of the sweep to a group corresponding to a tab indicated by the end point of the sweep, and executes processing of transferring the individual data to the group corresponding to the tab indicated by the end point of the sweep.

In the case shown in Fig. 7, an example which a left finger does not press the binding region B is described,. In the example, a currently displayed page is the page (2) shown in Fig. 6, and individual data at the start point of the sweep is the diary data. In this case, when a tab indicated by the end point of the sweep corresponds to the group (3), the diary data is transferred to the group (3) as an arrow Q shown in Fig. 6.

As mentioned above, according to the third embodiment of the present invention, when the touch panel displays the page of the low-ranking data with the hierarchical data structure, it is possible to transfer the displayed page to the group corresponding to the tab indicated by the end point of the sweep, if the sweep using a finger is executed from a region within the page to a region of the tab while pressing the binding region B. Further, when the touch panel displays the page of the low-ranking level with the hierarchical data structure, it is possible to transfer the individual data at the start point of the sweep to the group corresponding to the tab indicated by the end point of the sweep, if the sweep using a finger is executed from the individual data within the page to the region of the tab without pressing the binding region B. According to the present invention, even when data with a hierarchical data structure is displayed, it can be indentified which hierarchy's data the manipulation instruction by a touch operation performed on the touch panel directs to, and a predetermined function can be executed. Therefore, a simple and intuitive manipulation instruction for a user becomes possible.

It is possible to properly input a direct instruction to every hierarchy of data and to control display processing corresponding to the inputted instruction, while keeping intuitive simplicity.

While having described an invention of the present application referring to the embodiment, the invention of the present application is not limited to the above mentioned embodiments. It is to be understood that to the configurations and details of the inventions of the present application, various changes can be made within the scope of the invention of the present application by those skilled in the art.

The present invention is generally applicable to a portable phone, and an information processing device, as the portable terminal device.

## Claims

1. A portable terminal device (10) including a touch panel on a display screen (2), comprising:
a multi-touch detecting unit (31) that detects presence or absence of simultaneous touching two positions on the touch panel;
a press operation detecting unit (3) that detects a press operation performed on a predetermined region of the display screen (2), in the presence of simultaneous touching two positions on the touch panel;
a sweep operation detecting unit (4) that detects a sweep operation performed on another region of the display screen (2), and that detects positions of a start point and an end point for the sweep operation, when the press operation is detected by the press operation detecting unit (3);
**characterized in that**:
the display screen (2) simultaneously displays a high-ranking data object, the hierarchy of which is high-ranking, and a low-ranking data object, the hierarchy of which is low-ranking, included in the high-ranking data object; and
a terminal data processing unit (5) that identifies hierarchy of data to be manipulated on the basis of presence or absence of the press operation detected by the press operation detecting unit (3) and that executes processing for the low-ranking data object located at the start point of the sweep operation in the absence of the press operation, and executes processing for the high-ranking data object corresponding to contents of the sweep operation in the presence of the press operation.

2. The portable terminal device (1) according to claim 1, wherein
the terminal data processing unit (5) executes processing of displaying a following page or a preceding page, wherein the high-ranking data object displayed on the display screen (2) is a page including individual data as the low-ranking data object, when the press operation detecting unit (3) detects presence of the press operation, and if the sweep operation detecting unit (4) detects the sweep operation of sweeping the page from left to right or from right to left.

3. The portable terminal device (1) according to claim 1, wherein
when the high-ranking data object displayed on the display screen (2) is a page including individual data as the low-ranking data object, when the press operation detecting unit (3) detects presence of the press operation, and if the sweep operation detecting unit (4) detects the sweep operation of sweeping the page from top to bottom, the terminal data processing unit (5) deletes the page currently displayed.

4. The portable terminal device (1) according to claim 2 or 3, wherein
the terminal data processing unit (5) moves the individual data to an end point of the sweep operation, when the sweep operation detecting unit (5) detects the sweep operation of sweeping the individual data included in the page, in the absence of the press operation.

5. The portable terminal device (1) according to claim 2 or 3, wherein
the terminal data processing unit (5) deletes the individual data, when the sweep operation detecting unit (4) detects the sweep operation of sweeping the individual data included in the page to a data object indicating deletion of the individual data, in the absence of the press operation.

6. The portable terminal device (1) according to any one of claims 1 to 5, wherein the predetermined region of the display screen (2) is a rectangular region on the left side of the display screen (2).

7. A method for processing data manipulation for a portable terminal device (10) including a touch panel (31) on a display screen (2), comprising:
detecting presence or absence of simultaneous touching two positions on the touch panel (S103);
detecting a press operation performed on a predetermined region of the display screen in the presence of simultaneous touching two positions (S105), and a sweep operation performed on another region of the display screen (S106,S108)
detecting positions of a start point and an end point for the sweep operation, when the press operation is detected; **characterized in that**, the method further comprises:
simultaneously displaying a high-ranking data object, the hierarchy of which is high-ranking, and a low-ranking data object, the hierarchy of which is low-ranking, included in the data object on the display screen; and
identifying hierarchy of data to be manipulated on the basis of presence or absence of the press operation, and executing processing for the low-ranking object located at the start point of the sweep operation in the absence of the press operation, and executing processing for the high-ranking data object corresponding to the sweep operation, in the presence of the press operation.

8. A data manipulation processing program for causing a computer device including a touch panel on a display screen to execute a data manipulation processing, comprising: a program causing the computer device to execute:
detecting presence or absence of simultaneous touching two positions on the touch panel (S103);
detecting a press operation performed on a predetermined region of the display screen in the presence of simultaneous touching two positions (S105), and a sweep operation performed on another region of the display screen (S106,S108);
detecting positions of a start point and an end point for the sweep operation, when the press operation is detected;
**characterized in that**, the program causes the computer device to further execute: simultaneously displaying a high-ranking data object, the hierarchy of which is high-ranking, and a low-ranking data object, the hierarchy of which is low ranking, included in the data object on the display screen; and
identifying hierarchy of data to be manipulated on the basis of presence or absence of the press operation, and executing processing for the low-ranking object located at the start point of the sweep operation in the absence of the press operation, and executing processing for the high-ranking data object corresponding to the sweep operation, in the presence of the press operation.

9. The data manipulation processing program according to claim 8, further comprising a program causing the computer device to execute
displaying a following page or a preceding page, wherein the high-ranking data object is a page including individual data as the low-ranking data object, and when the sweep operation of sweeping the page from left to right or from right to left is executed in the presence of the press operation.

10. The data manipulation processing program according to claim 8, further comprising a program causing the computer device to execute
when the high-ranking data object is a page including individual data as the low-ranking data object, and when the sweep operation of sweeping the page from top to bottom is executed in the presence of the press operation, deleting the page currently displayed.

11. The data manipulation processing program according to claim 9 or 10, further comprising a program causing the computer device to execute
moving the individual data to an end point of the sweep operation, when the sweep operation of sweeping the individual data included in the page is executed in the absence of the press operation.

12. The data manipulation processing program according to claim 9 or 10, further comprising a program causing the computer device to execute
deleting the individual data, when the sweep operation of sweeping the individual data included in the page to a data object indicating deletion of the individual data is executed in the absence of the press operation.

## Patentansprüche

1. Tragbares Endgerät (10), welches ein Bildschirm-Tastfeld auf einem Anzeigeschirm (2) enthält, umfassend:
eine Mehrfachberührung-Erfassungseinheit (31), welche Vorhandensein oder Abwesenheit gleichzeitiger Berührung von zwei Positionen auf dem Bildschirm-Tastfeld erfasst;
eine Druckoperation-Erfassungseinheit (3), welche eine auf einem vorbestimmten Bereich des Anzeigeschirms (2) vorgenommene Druckoperation beim Vorhandensein simultaner Berührung von zwei Positionen auf dem Bildschirm-Tastfeld erfasst;
eine Wischoperation-Erfassungseinheit (4), welche eine auf einem anderen Bereich des Anzeigeschirms (2) vorgenommene Wischoperation erfasst und Positionen eines Startpunkts und eines Endpunkts für die Wischoperation erfasst, wenn die Druckoperation durch die Druckoperation-Erfassungseinheit (3) erfasst ist;
**dadurch gekennzeichnet, dass**
der Anzeigeschirm (2) gleichzeitig ein hochrangiges Datenobjekt, dessen Hierarchie hochrangig ist, und ein in dem hochrangigen Datenobjekt enthaltenes niedrigrangiges Datenobjekt, dessen Hierarchie niedrigrangig ist, anzeigt; und
eine Einheit für abschließende Datenverarbeitung (5), welche eine auf der Basis von Vorhandenseins oder Abwesenheit der durch die Druckoperation-Erfassungseinheit (3) erfassten Druckoperation zu manipulierende Hierarchie von Daten identifiziert und Verarbeitung für das sich an dem Startpunkt der Wischoperation beim Vorhandensein der Druckoperation befindende niedrigrangige Datenobjekt ausführt und Verarbeitung für das hochrangige Datenobjekt übereinstimmend mit Inhalten der Wischoperation beim Vorhandensein der Druckoperation ausführt.

2. Tragbares Endgerät (1) nach Anspruch 1, wobei
die Einheit zur abschließenden Datenverarbeitung (5) Verarbeitung des Anzeigens einer nachfolgenden Seite oder einer vorhergehenden Seite ausführt, wobei das auf dem Anzeigeschirm (2) angezeigte hochrangige Datenobjekt eine Seite ist, welche individuelle Daten als das niedrigrangige Datenobjekt enthält, wenn die Druckoperation-Erfassungseinheit (3) Vorhandensein der Druckoperation erfasst und wenn die Wischoperation-Erfassungseinheit (4) die Wischoperation des Wischens der Seite von links nach rechts oder von rechts nach links erfasst.

3. Tragbares Endgerät (1) nach Anspruch 1, wobei,
wenn das auf dem Anzeigeschirm (2) angezeigte hochrangige Datenobjekt eine Seite ist, die individuelle Daten als das niedrigrangige Datenobjekt enthält, wenn die Druckoperation-Erfassungseinheit (4) Vorhandensein der Druckoperation erfasst und wenn die Wischoperation-Erfassungseinheit (4) die Wischoperation des Wischens der Seite von oben nach unten erfasst, die Einheit zur abschließenden Datenverarbeitung (5) die gegenwärtig angezeigte Seite löscht.

4. Tragbares Endgerät (1) nach Anspruch 2 oder 3, wobei
die Einheit zur abschließenden Datenverarbeitung (5) die individuellen Daten an einen Endpunkt der Wischoperation bewegt, wenn die Wischoperation-Erfassungseinheit (5) die Wischoperation des Wischens der in der Seite enthaltenen individuellen Daten bei der Abwesenheit der Druckoperation erfasst.

5. Tragbares Endgerät (1) nach Anspruch 2 oder 3, wobei
die Einheit zur abschließenden Datenverarbeitung (5) die individuellen Daten löscht, wenn die Wischoperation-Erfassungseinheit (4) die Wischoperation des Wischens der in der Seite enthaltenen individuellen Daten auf ein Datenobjekt, welches Löschen der individuellen Daten angibt, bei der Abwesenheit der Druckoperation erfasst.

6. Tragbares Endgerät (1) nach einem der Ansprüche 1 bis 5, wobei der vorbestimmte Bereich des Anzeigeschirms (2) ein rechteckiger Bereich auf der linken Seite des Anzeigeschirms (2) ist.

7. Verfahren zum Verarbeiten von Datenmanipulation für ein tragbares Endgerät (10), welches ein Bildschirm-Tastfeld (31) auf einem Anzeigeschirm (2) enthält, umfassend:
Erfassen von Vorhandensein oder Abwesenheit gleichzeitiger Berührung von zwei Positionen auf dem Bildschirm-Tastfeld (S103);
Erfassen einer auf einem vorbestimmten Bereich des Anzeigeschirms vorgenommenen Druckoperation beim Vorhandensein von gleichzeitiger Berührung von zwei Positionen (S105) und einer auf einem anderen Bereich des Anzeigeschirms vorgenommenen Wischoperation (S106, S108);
Erfassen von Positionen eines Startpunkts und eines Endpunkts für die Wischoperation, wenn die Druckoperation erfasst wird,
**dadurch gekennzeichnet, dass** das Verfahren ferner umfasst:
gleichzeitiges Anzeigen eines hochrangingen Datenobjekt, dessen Hierarchie hochrangig ist, und eines in dem Datenobjekt enthaltenen niedrigrangigen Datenobjekts, dessen Hierarchie niedrigrangig ist, auf dem Anzeigeschirm; und
Identifizieren einer zu manipulierenden Hierarchie von Daten auf der Basis von Vorhandensein oder Abwesenheit der Druckoperation und Ausführen von Verarbeitung für das sich an dem Startpunkt der Wischoperation befindende niedrigrangige Objekt bei der Abwesenheit der Druckoperation und Ausführen von Verarbeitung für das hochrangige Datenobjekt entsprechend der Wischoperation beim Vorhandensein der Druckoperation.

8. Programm zur Verarbeitung von Datenmanipulation zum Veranlassen eines Computergeräts, welches ein Bildschirm-Tastfeld auf einem Anzeigeschirm enthält, um eine Verarbeitung von Datenmanipulation auszuführen, umfassend: ein Programm, welches das Computergerät dazu veranlasst, auszuführen:
Erfassen von Vorhandensein oder Abwesenheit von gleichzeitiger Berührung von zwei Positionen auf dem Bildschirm-Tastfeld (S103);
Erfassen einer auf einem vorbestimmten Bereich des Anzeigeschirms vorgenommenen Druckoperation beim Vorhandensein von gleichzeitiger Berührung von zwei Positionen (S105) und einer auf einem anderen Bereich des Anzeigeschirms vorgenommenen Wischoperation (S106, S108);
Erfassen von Positionen eines Startpunkts und eines Endpunkts für die Wischoperation, wenn die Druckoperation erfasst wird,
**dadurch gekennzeichnet, dass** das Programm das Computergerät dazu veranlasst, ferner auszuführen:
gleichzeitiges Anzeigen eines hochrangingen Datenobjekt, dessen Hierarchie hochrangig ist, und eines in dem Datenobjekt enthaltenen niedrigrangigen Datenobjekts, dessen Hierarchie niedrigrangig ist, auf dem Anzeigeschirm; und
Identifizieren einer zu manipulierenden Hierarchie von Daten auf der Basis von Vorhandensein oder Abwesenheit der Druckoperation und Ausführen von Verarbeitung für das sich an dem Startpunkt der Wischoperation befindende niedrigrangige Objekt bei der Abwesenheit der Druckoperation und Ausführen von Verarbeitung für das hochrangige Datenobjekt entsprechend der Wischoperation beim Vorhandensein der Druckoperation.

9. Programm zur Verarbeitung von Datenmanipulation nach Anspruch 8, ferner umfassend ein Programm, welches das Computergerät dazu veranlasst, auszuführen:
Anzeigen einer nachfolgenden Seite oder einer vorhergehenden Seite, wobei das hochrangige Datenobjekt eine Seite ist, welche individuelle Daten als das niedrigrangige Datenobjekt enthält, und wenn die Wischoperation des Wischens der Seite von links nach rechts oder von rechts nach links beim Vorhandensein der Druckoperation ausgeführt wird.

10. Programm zur Verarbeitung von Datenmanipulation nach Anspruch 8, ferner umfassend ein Programm, welches das Computergerät dazu veranlasst, auszuführen:
wenn das hochrangige Datenobjekt eine Seite ist, die individuelle Daten als das niedrigrangige Datenobjekt enthält, und wenn die Wischoperation des Wischens der Seite von oben nach unten beim Vorhandensein der Druckoperation ausgeführt wird, Löschen der gegenwärtig angezeigten Seite.

11. Programm zur Verarbeitung von Datenmanipulation nach Anspruch 9 oder 10, ferner umfassend ein Programm, welches das Computergerät dazu veranlasst, auszuführen:
Bewegen der individuellen Daten an einen Endpunkt der Wischoperation, wenn die Wischoperation des Wischens der in der Seite enthaltenen individuellen Daten bei der Abwesenheit der Druckoperation ausgeführt wird.

12. Programm zur Verarbeitung von Datenmanipulation nach Anspruch 9 oder 10, ferner umfassend ein Programm, welches das Computergerät dazu veranlasst, auszuführen:
Löschen der individuellen Daten, wenn die Wischoperation des Wischens der in der Seite enthaltenen individuellen Daten auf ein Datenobjekt, welches Löschen der individuellen Daten angibt, bei der Abwesenheit der Druckoperation ausgeführt wird.

## Revendications

1. Dispositif terminal portable (10) incluant un panneau tactile sur un écran d'affichage (2), comprenant :
une unité de détection multi-effleurement (31) qui détecte la présence ou l'absence d'effleurement simultané de deux positions sur le panneau tactile ;
une unité de détection d'opération d'appui (3) qui détecte une opération d'appui effectuée sur une région prédéterminée de l'écran d'affichage (2), en présence d'effleurement simultané de deux positions sur le panneau tactile ;
une unité de détection d'opération de balayage (4) qui détecte une opération de balayage effectuée sur une autre région de l'écran d'affichage (2), et qui détecte des positions d'un point de départ et d'un point final pour l'opération de balayage, lorsque l'opération d'appui est détectée par l'unité de détection d'opération d'appui (3) ;
**caractérisé en ce que** :
l'écran d'affichage (2) affiche simultanément un objet de données de classement élevé, dont la hiérarchie est de classement élevé, et un objet de données de classement bas, dont la hiérarchie est de classement bas, inclus dans l'objet de données de classement élevé ; et
une unité de traitement de données terminales (5) qui identifie une hiérarchie de données devant être manipulées sur la base de la présence ou de l'absence de l'opération d'appui détectée par l'unité de détection d'opération d'appui (3) et qui exécute un traitement pour l'objet de données de classement bas situé au point de départ de l'opération de balayage en l'absence de l'opération d'appui, et exécute un traitement pour l'objet de données de classement élevé correspondant au contenu de l'opération de balayage en présence de l'opération d'appui.

2. Dispositif terminal portable (1) selon la revendication 1, dans lequel
l'unité de traitement de données terminales (5) exécute un traitement d'affichage d'une page suivante ou d'une page précédente, où l'objet de données de classement élevé affiché sur l'écran d'affichage (2) est une page incluant des données individuelles comme l'objet de données de classement bas, lorsque l'unité de détection d'opération d'appui (3) détecte la présence de l'opération d'appui, et si l'unité de détection d'opération de balayage (4) détecte l'opération de balayage consistant à balayer la page de gauche à droite ou de droite à gauche.

3. Dispositif terminal portable (1) selon la revendication 1, dans lequel
lorsque l'objet de données de classement élevé affiché sur l'écran d'affichage (2) est une page incluant des données individuelles comme l'objet de données de classement bas, lorsque l'unité de détection d'opération d'appui (3) détecte la présence de l'opération d'appui, et si l'unité de détection d'opération de balayage (4) détecte l'opération de balayage consistant à balayer la page de haut en bas, l'unité de traitement de données terminales (5) supprime la page affichée actuellement.

4. Dispositif terminal portable (1) selon la revendication 2 ou 3, dans lequel
l'unité de traitement de données terminales (5) déplace les données individuelles vers un point final de l'opération de balayage, lorsque l'unité de détection d'opération de balayage (5) détecte l'opération de balayage consistant à balayer les données individuelles incluses dans la page, en l'absence de l'opération d'appui.

5. Dispositif terminal portable (1) selon la revendication 2 ou 3, dans lequel
l'unité de traitement de données terminales (5) supprime les données individuelles, lorsque l'unité de détection d'opération de balayage (4) détecte l'opération de balayage consistant à balayer les données individuelles incluses dans la page vers un objet de données indiquant la suppression des données individuelles, en l'absence de l'opération d'appui.

6. Dispositif terminal portable (1) selon l'une quelconque des revendications 1 à 5, dans lequel la région prédéterminée de l'écran d'affichage (2) est une région rectangulaire sur le côté gauche de l'écran d'affichage (2).

7. Procédé pour traiter une manipulation de données pour un dispositif terminal portable (10) incluant un panneau tactile (31) sur un écran d'affichage (2), comprenant :
la détection de la présence ou de l'absence d'effleurement simultané de deux positions sur le panneau tactile (S103) ;
la détection d'une opération d'appui effectuée sur une région prédéterminée de l'écran d'affichage en présence d'effleurement simultané de deux positions (S105), et d'une opération de balayage effectuée sur une autre région de l'écran d'affichage (S106, S108) ;
la détection de positions d'un point de départ et d'un point final pour l'opération de balayage, lorsque l'opération d'appui est détectée ;
**caractérisé en ce que**, le procédé comprend en outre :
l'affichage simultané d'un objet de données de classement élevé, dont la hiérarchie est de classement élevé, et d'un objet de données de classement bas, dont la hiérarchie est de classement bas, inclus dans l'objet de données sur l'écran d'affichage ; et
l'identification d'une hiérarchie de données devant être manipulées sur la base de la présence ou de l'absence de l'opération d'appui, et l'exécution d'un traitement pour l'objet de classement bas situé au point de départ de l'opération de balayage en l'absence de l'opération d'appui, et l'exécution d'un traitement pour l'objet de données de classement élevé correspondant à l'opération de balayage, en présence de l'opération d'appui.

8. Programme de traitement de manipulation de données pour amener un dispositif informatique incluant un panneau tactile sur un écran d'affichage à exécuter un traitement de manipulation de données, comprenant :
un programme amenant le dispositif informatique à exécuter :
la détection de la présence ou de l'absence d'effleurement simultané de deux positions sur le panneau tactile (S103) ;
la détection d'une opération d'appui effectuée sur une région prédéterminée de l'écran d'affichage en présence d'effleurement simultané de deux positions (S105), et d'une opération de balayage effectuée sur une autre région de l'écran d'affichage (S106, S108) ;
la détection de positions d'un point de départ et d'un point final pour l'opération de balayage, lorsque l'opération d'appui est détectée ;
**caractérisé en ce que**, le programme amène le dispositif informatique à exécuter en outre :
l'affichage simultané d'un objet de données de classement élevé, dont la hiérarchie est de classement élevé, et d'un objet de données de classement bas, dont la hiérarchie est de classement bas, inclus dans l'objet de données sur l'écran d'affichage ; et
l'identification d'une hiérarchie de données devant être manipulées sur la base de la présence ou de l'absence de l'opération d'appui, et l'exécution d'un traitement pour l'objet de classement bas situé au point de départ de l'opération de balayage en l'absence de l'opération d'appui, et l'exécution d'un traitement pour l'objet de données de classement élevé correspondant à l'opération de balayage, en présence de l'opération d'appui.

9. Programme de traitement de manipulation de données selon la revendication 8, comprenant en outre un programme amenant le dispositif informatique à exécuter
l'affichage d'une page suivante ou d'une page précédente, où l'objet de données de classement élevé est une page incluant des données individuelles comme l'objet de données de classement bas, et lorsque l'opération de balayage consistant à balayer la page de gauche à droite ou de droite à gauche est exécutée en présence de l'opération d'appui.

10. Programme de traitement de manipulation de données selon la revendication 8, comprenant en outre un programme amenant le dispositif informatique à exécuter
lorsque l'objet de données de classement élevé est une page incluant des données individuelles comme l'objet de données de classement bas, et lorsque l'opération de balayage consistant à balayer la page de haut en bas est exécutée en présence de l'opération d'appui, la suppression de la page affichée actuellement.

11. Programme de traitement de manipulation de données selon la revendication 9 ou 10, comprenant en outre un programme amenant le dispositif informatique à exécuter
le déplacement des données individuelles vers un point final de l'opération de balayage, lorsque l'opération de balayage consistant à balayer les données individuelles incluses dans la page est exécutée en l'absence de l'opération d'appui.

12. Programme de traitement de manipulation de données selon la revendication 9 ou 10, comprenant en outre un programme amenant le dispositif informatique à exécuter
la suppression des données individuelles, lorsque l'opération de balayage consistant à balayer les données individuelles incluses dans la page vers un objet de données indiquant la suppression des données individuelles est exécutée en l'absence de l'opération d'appui.
